# EUROPEAN PATENT APPLICATION

(11) **EP 4 129 949 A1**
(43) Date of publication of application: **08.02.2023**
(21) Application number: 20919368.9
(22) Date of filing: 24.11.2020
(51) Int. Cl.: C04B 28/04, C04B 18/04

(54) **UNFIRED CONSTRUCTION MATERIAL USING ORIGINAL STATE SHIELDING SOIL AND PREPARATION METHOD THEREFOR**

(30) Priority: 24.03.2020 CN 202010211681
(71) Applicant: CHINA CONSTRUCTION FIFTH ENGINEERING DIVISION CO., LTD, Changsha, Hunan 410004 (CN)
(72) Inventor: XI, Zhiqin, Changsha, Hunan 410004 (CN); LI, Shuisheng, Changsha, Hunan 410004 (CN); XU, Ning, Changsha, Hunan 410004 (CN)
(74) Representative: advotec.
(86) International application number: PCT/CN2020/131111
(87) International publication number: WO 2021/189886

(57) **Abstract**

The present application relates to an unfired building material containing undisturbed shield muck and a preparation method thereof. The unfired building material containing undisturbed shield muck includes the following raw materials in parts by weight: 1 to 100 parts of undisturbed shield muck, 1 to 60 parts of granulated blast-furnace slags, 1 to 10 parts of quicklime, 1 to 10 parts of sodium carbonate, 1 to 5 parts of sodium silicate, and 1 to 20 parts of water. The unfired building material containing undisturbed shield muck is basically free of efflorescence phenomenon when encountering water, has good strength and durability, as well as a small drying shrinkage value, and is economical and environment-friendly. The present application further discloses a preparation method of the above material.

## Description

### CROSS-REFERENCE TO RELATED APPLICATION

The present application claims priority to Chinese Application No. 202010211681.1 filed on March 24, 2020, entitled "Unfired Building Material Containing Undisturbed Shield Muck and Preparation Method Thereof', which is hereby incorporated by reference in its entirety.

### FIELD OF TECHNOLOGY

The present application relates to the technical field of building materials and solid waste treatment, and more particularly, to an unfired building material containing undisturbed shield muck and a preparation method thereof.

### BACKGROUND

First of all, for the disposal and resource utilization of shield muck, the primary problem is dehydration. The traditional dehydration way is to air or dry shield muck, while the former is too inefficient, and the latter is obviously not economically cost-effective. In addition, shield muck with high mud-containing rate has higher water content and is more difficult to be dehydrated than other types of earth pressure balance shield muck. If the undisturbed shield muck may be used directly without being dehydrated, the front-end treatment cost of the muck will be greatly decreased, and at the same time, the added value of the back-end products of the muck will be increased. Secondly, various curing agents are currently used to cure soft soils such as peat, silt, silty soil, peaty soil, etc., or municipal sludge, waste mud, construction residue, tailings and the like. After being cured, they have the highest strength of only a few MPa and poor durability, which are far from the basic requirements of building materials.

Thirdly, although the traditional methods of geopolymer may be used to cure the shield muck to get better mechanical properties, and are resistant to water, high temperature, acid and alkali corrosion, etc. Due to the use of alkaline activators, sodium ions will be inevitably resided inside the specimen, and will dissociate to the surface of the specimen after encountering water, and react with carbon dioxide in the atmosphere to form carbonate-like substances, leading to the formation of weathering. In this case, it will not only affect the appearance of a material, but more importantly, it will produce a certain pressure on the internal pores of the material, which will make the internal structure of the material loose and crack, and then aggravate the efflorescence, cause the material to be pulverized, and finally make the material completely lose its basic mechanical properties and durability. Efflorescence, known as the "cancer of concrete", is also an unavoidable problem for geopolymer materials. Finally, on the premise of satisfying the basic mechanical properties and durability of materials, how to reduce the production costs and ensure economy is also a prominent issue in muck disposal and resource utilization.

It will produce huge social, ecological and economic benefits if the difficulties such as high mud and water contents of the undisturbed shield muck, as well as low strength, poor durability, serious efflorescence, inability to meet the requirements of construction materials, and the lack of economy brought by the traditional curing methods can be overcome.

### SUMMARY

The technical problem sought to be solved by the present application is how to provide a building material using undisturbed shield muck as raw materials and capable of avoiding efflorescence.

In order to solve the technical problem above, the present application provides an unfired building material containing undisturbed shield muck and a preparation method thereof.

An unfired building material containing undisturbed shield muck includes the following raw materials in parts by weight: 1 to 100 parts of undisturbed shield muck, 1 to 60 parts of granulated blast-furnace slags, 1 to 10 parts of quicklime, 1 to 10 parts of sodium carbonate, 1 to 5 parts of sodium silicate, and 1 to 20 parts of water.

In an embodiment, the undisturbed shield muck has a mud-containing rate of more than 70%.

In an embodiment, the granulated blast-furnace slag has a mesh size of 200 to 400.

In an embodiment, the quicklime has a calcium content of 91% to 95%, and a fineness of 200 mesh with a passing rate of 70% and more.

In an embodiment, the sodium carbonate has a mesh size of 150 to 200 meshes; and/or, the sodium silicate is sodium silicate powder or liquid sodium silicate, wherein the sodium silicate powder has a modulus of 2.3 to 3.0, and the liquid sodium silicate has a modulus of 3.1 to 3.4.

The present application further provides a preparation method of the above-mentioned unfired building material containing undisturbed shield muck, including the following steps:
1) adding water to the undisturbed shield muck in proportion and stirring to obtain a first slurry;
2) adding granulated blast-furnace slags, quicklime, sodium carbonate and sodium silicate to the first slurry obtained in step 1) in proportion, and continuing stirring to obtain a second slurry; and
3) pouring the second slurry obtained in step 2) into a mould, curing and demoulding to obtain the unfired building material containing undisturbed shield muck.

In an embodiment, in the step 1), the first slurry is obtained by adding the water to the undisturbed shield muck in proportion and stirring for 5 to 10 minutes.

In an embodiment, in the step 2), the second slurry is obtained by adding the granulated blast-furnace slags, the quicklime, the sodium carbonate and the sodium silicate to the first slurry obtained in step 1) in proportion, and continuing stirring for 5 to 10 minutes.

In an embodiment, in the step 2), the granulated blast-furnace slags, the quicklime, the sodium carbonate and the sodium silicate are mixed evenly in proportion, and then added to the first slurry obtained in step 1).

In an embodiment, in the step 2), the sodium silicate is liquid sodium silicate; the second slurry is obtained by mixing the granulated blast-furnace slags, the quicklime and the sodium carbonate evenly in proportion, adding a resulting mixture to the first slurry, stirring for 5 to 10 minutes, and then adding the liquid sodium silicate and continuing stirring.

Compared with the prior art, the beneficial effects of the present application include: in the unfired building material containing undisturbed shield muck prepared from raw materials including 1 to 100 parts of undisturbed shield muck, 1 to 60 parts of granulated blast-furnace slags, 1 to 10 parts of quicklime, 1 to 10 parts of sodium carbonate, 1 to 5 parts of sodium silicate, and 1 to 20 parts of water, the undisturbed shield muck contains water, and quicklime powder and sodium carbonate are dissolved in the undisturbed shield muck and react to produce sodium hydroxide, thereby avoiding the introduction of excessive sodium ions when sodium hydroxide raw materials are directly used, and reducing the leaching of sodium ions from the source. The mixing amount of sodium silicate is only 1 to 5 parts, while the mixing amount of granulated blast-furnace slags is 1 to 60 parts, such that the mixing amount of sodium silicate accounts for less than 1 % of the total mass ratio of the granulated blast-furnace slags and the undisturbed shield muck, with 1 to 20 parts of water, the concentration of sodium silicate after dissolution is greatly reduced. The calcium ions produced by the hydration of quicklime exchange reaction with the low-valence sodium ions on the surface of clay soil particles, which further reduces the concentration of mobile sodium ions existing in the solution in the internal pores of the material. The undisturbed shield muck mainly contains fine particles, has a higher content of clay soil particles with a greater void ratio than muck containing more gravel and sand but a smaller permeability coefficient and less penetrating macropores, so that the number of leaching channels of sodium ions or soluble salts is reduced, and the leaching channels of sodium ions are effectively cut off, thereby effectively inhibiting the efflorescence of the material. This building material is basically free of efflorescence phenomenon when encountering water and has good strength.

### BRIEF DESCRIPTION OF THE DRAWINGS

The features and advantages of the present application will be understood more clearly by referring to the drawings which are only schematic and should not be construed as limiting the present application in any way. In the drawings:
FIG. 1 shows a cumulative distribution curve of particle sizes of highly weathered slate shield muck according to the present application.
FIG. 2 shows stress-strain curves of cylindrical specimens under uniaxial compression after being cured for 28 days according to Embodiment 1 of the present application.
FIG. 3 shows a failure model of cylindrical specimens under uniaxial compression after being cured for 28 days according to Embodiment 1 of the present application.
FIG. 4 shows stress-strain curves of cylindrical specimens under uniaxial compression after being cured for 28 days according to Embodiment 2 of the present application.
FIG. 5 shows a failure model of cylindrical specimens under uniaxial compression after being cured for 28 days according to Embodiment 2 of the present application.
FIG. 6 shows stress-strain curves of cylindrical specimens under uniaxial compression after being cured for 28 days according to Embodiment 3 of the present application.
FIG. 7 shows a failure model of cylindrical specimens under uniaxial compression after being cured for 28 days according to Embodiment 3 of the present application.
FIG. 8 shows stress-strain curves of cylindrical specimens under uniaxial compression after being cured for 28 days according to Embodiment 4 of the present application.
FIG. 9 shows a failure model of cylindrical specimens under uniaxial compression after being cured for 28 days according to Embodiment 4 of the present application.
FIG. 10 shows stress-strain curves of cylindrical specimens under uniaxial compression after being cured for 28 days according to Embodiment 5 of the present application.
FIG. 11 shows a failure model of cylindrical specimens under uniaxial compression after being cured for 28 days according to Embodiment 5 of the present application.
FIG. 12 shows stress-strain curves of cylindrical specimens under uniaxial compression after being cured for 28 days and soaked for 4 days in water according to Embodiment 5 of the present application.
FIG. 13 shows a failure model of cylindrical specimens under uniaxial compression after being cured for 28 days and soaked for 4 days in water according to Embodiment 5 of the present application.
FIG. 14 shows stress-strain curves of cylindrical specimens under uniaxial compression after being cured for 28 days and subjected to 15 freeze-thaw cycles according to Embodiment 5 of the present application.
FIG. 15 shows a failure model of cylindrical specimens under uniaxial compression after being cured for 28 days and subjected to 15 freeze-thaw cycles according to Embodiment 5 of the present application.
FIG. 16 shows an appearance morphology of cylindrical specimens after being subjected to 15 freeze-thaw cycles according to Embodiment 5 of the present application.
FIG. 17 is a diagram of efflorescence of cylindrical specimens after 90 days from soaking to air drying according to Embodiment 4 of the present application.
FIG. 18 is a comparison diagram of efflorescence between unfired bricks after 28 days from soaking to air drying according to Embodiment 5 and Comparative Example 1 of the present application, wherein the left side is an unfired brick prepared in Comparative Example 1, and the right side is an unfired brick prepared in Embodiment 5.

### DETAILED DESCRIPTION

In order to make the above-mentioned objectives, features and advantages of the present application more obvious and understandable, the specific embodiments of the present application will be described in detail below in conjunction with the accompanying drawings. In the following description, many specific details are explained to facilitate a full understanding of the present application. However, the present application may be implemented in many ways other than those described herein, and those skilled in the art can make similar improvements without violating the concept of the present application. Therefore, the present application is not limited by the specific embodiments disclosed below.

A specific embodiment provides an unfired building material containing undisturbed shield muck, consisting of the following raw materials in parts by weight: 1 to 100 parts of undisturbed shield muck, 1 to 60 parts of granulated blast-furnace slags, 1 to 10 parts of quicklime, 1 to 10 parts of sodium carbonate, 1 to 5 parts of sodium silicate, and 1 to 20 parts of water; wherein the undisturbed shield muck has a mud-containing rate of more than 70%; the granulated blast-furnace slag has a mesh size of 200 to 400; the quicklime has a calcium content of 91% to 95%, and a fineness of 200 mesh with a passing rate of 70% and more; the sodium carbonate has a mesh size of 150 to 200 mesh; and/or, the sodium silicate is sodium silicate powder or liquid sodium silicate, wherein the sodium silicate powder has a modulus of 2.3 to 3.0, and the liquid sodium silicate has a modulus of 3.1 to 3.4.

A specific embodiment further provides a preparation method of the above-mentioned unfired building material containing undisturbed shield muck, including the following steps:
1) directly crushing a few coarse particles in the undisturbed shield muck through double rollers, so that the content of coarse particles with a particle size of 2 mm or more does not exceed 5%, and testing the water content of the undisturbed shield muck;
2) adding water to the undisturbed shield muck in proportion and stirring for 5 to 10 minutes to obtain a first slurry;
3) mixing and stirring granulated blast-furnace slags, quicklime, sodium carbonate and sodium silicate evenly in proportion, adding a resulting mixture to the first slurry obtained in step 2), and continuing stirring for 5 to 10 minutes to obtain a second slurry; further, when the sodium silicate is liquid sodium silicate, mixing and stirring the granulated blast-furnace slags, the quicklime and the sodium carbonate evenly in proportion, adding a resulting mixture to the first slurry, stirring for 5 to 10 minutes, and then adding the liquid sodium silicate and continuing stirring for 5 to 10 minutes to obtain the second slurry; and
4) pouring the second slurry obtained in step 3) into a mould, curing and demoulding to obtain the unfired building material containing undisturbed shield muck.

In order to further illustrate the unfired building material containing undisturbed shield muck and the preparation method thereof proposed in these specific embodiments, embodiments are listed below for detailed description.

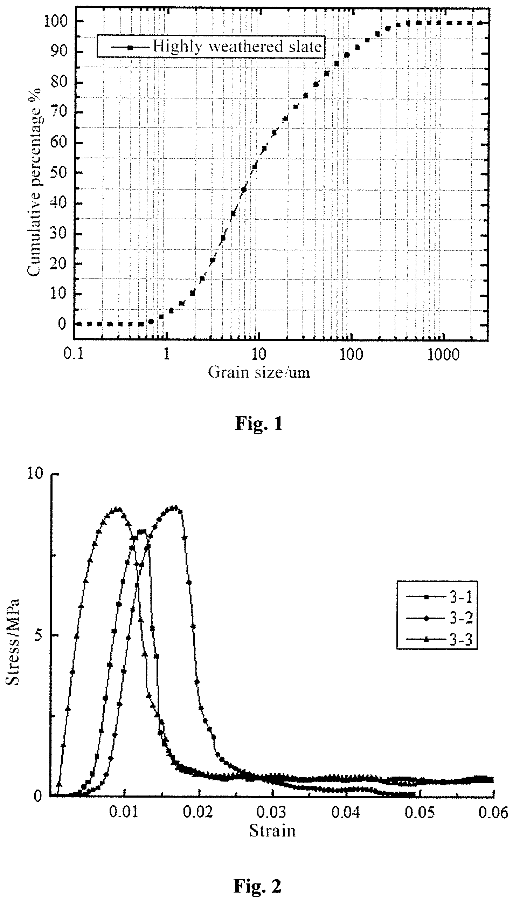

The highly weathered slate undisturbed shield muck in the following embodiments is taken from a certain region of the second bid section of Changsha Metro Line 6. The distribution of particle sizes of the muck is shown in FIG. 1. The muck has been tested to have a water content of 33% and a mud-containing rate of 88%; the granulated blast-furnace slag has a mesh size of 200; the quicklime has a fineness of 200 mesh with a passing rate of 80% and a calcium content of 91%; the sodium carbonate has a mesh size of 150; the sodium silicate powder has a modulus of 2.85 and a fineness of 100 mesh with a passing rate of 98.5%; the liquid sodium silicate has a modulus of 3.26; all of which are commercially available.

### Embodiment 1

The unfired building material containing undisturbed shield muck is prepared by the following method including:
taking 71.07 parts (by weight, the same below) of the undisturbed shield muck, and directly crushing a few coarse particles through double rollers, so that the content of coarse particles with a particle size of 2 mm or more does not exceed 5%; adding 11.49 parts of water to the 71.07 parts of the undisturbed shield muck and stirring for 5 minutes to obtain a first slurry; at the same time, mixing and stirring 13.36 parts of granulated blast-furnace slags, 1.59 parts of quicklime, 1.59 parts of sodium carbonate and 0.90 parts of sodium silicate powder evenly, and then adding a resulting mixture to the undisturbed shield muck and stirring for 10 minutes again to obtain a second slurry; pouring the second slurry into a mould with a height of 100 mm and a diameter of 50 mm, demoulding after naturally curing with film covering for 1 day, and then continuing natural curing with film covering until the 28th day to obtain the unfired building material containing undisturbed shield muck.

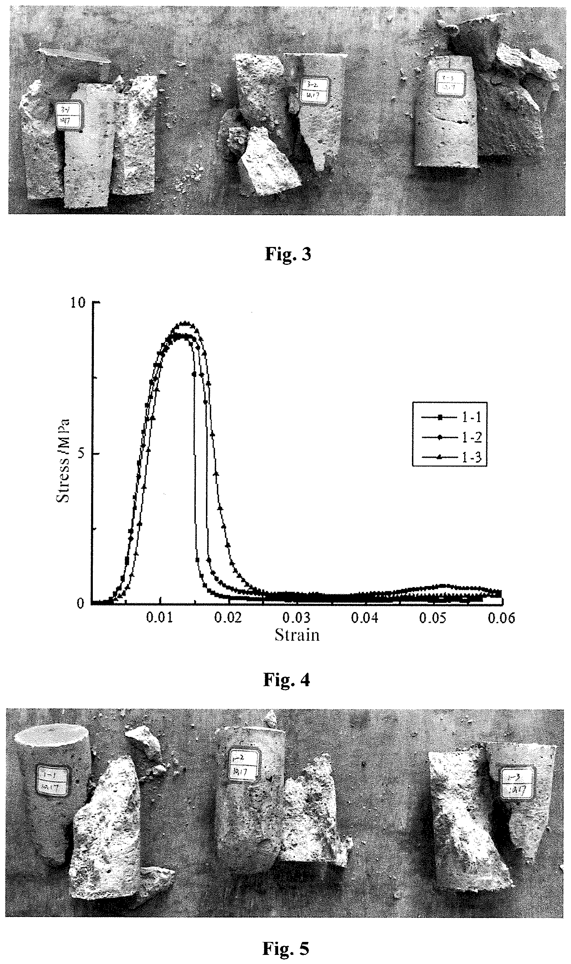

Three specimens made by this method, as shown in FIG. 2, have an average strength of 8.71 MPa. As shown in FIG. 3, under uniaxial compression, the specimens of the unfired building material containing undisturbed shield muck exhibit integral splitting failure, and show high strength.

### Embodiment 2

The unfired building material containing undisturbed shield muck is prepared by the following method including:
taking 71.07 parts of the undisturbed shield muck, and directly crushing a few coarse particles through double rollers, so that the content of coarse particles with a particle size of 2 mm or more does not exceed 5%; adding 11.49 parts of water to the 71.07 parts of the undisturbed shield muck and stirring for 5 minutes to obtain a first slurry; at the same time, mixing and stirring 13.36 parts of granulated blast-furnace slags and 0.90 parts of sodium silicate powder evenly, and then adding a resulting mixture to the undisturbed shield muck and continuing stirring for 5 minutes; finally adding a mixture of 1.59 parts of quicklime and 1.59 parts of sodium carbonate and stirring for 5 minutes again to obtain a second slurry; pouring the second slurry into a mould with a height of 100 mm and a diameter of 50 mm, demoulding after naturally curing with film covering for 1 day, and then continuing natural curing with film covering until the 28th day to obtain the final unfired building material containing undisturbed shield muck. It has been tested to have an average strength is 9.06 MPa on the 28th day.

Three specimens made by this method, as shown in FIG. 4, have an average strength of 9.06 MPa. As shown in FIG. 5, under uniaxial compression, the specimens of the unfired building material containing undisturbed shield muck exhibit integral splitting failure, and show high strength.

### Embodiment 3

The unfired building material containing undisturbed shield muck is prepared by the following method including:
taking 71.07 parts of the undisturbed shield muck, and directly crushing a few coarse particles through double rollers, so that the content of coarse particles with a particle size of 2 mm or more does not exceed 5%; adding 11.49 parts of water to the 71.07 parts of the undisturbed shield muck and stirring for 5 minutes to obtain a first slurry; at the same time, mixing and stirring 13.36 parts of granulated blast-furnace slags, 1.59 parts of quicklime and 1.59 parts of sodium carbonate evenly, and then adding a resulting mixture to the undisturbed shield muck and continuing stirring for 5 minutes; finally adding 0.90 parts of sodium silicate powder and stirring for 5 minutes again to obtain a second slurry; pouring the second slurry into a mould with a height of 100 mm and a diameter of 50 mm, demoulding after naturally curing with film covering for 1 day, and then continuing natural curing with film covering until the 28th day to obtain the final unfired building material.

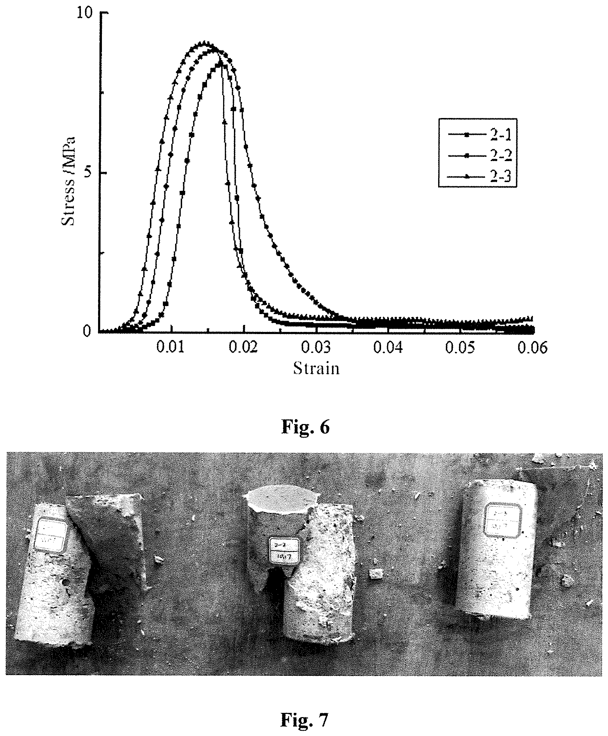

Three specimens made by this method, as shown in FIG. 6, have an average strength of 8.76 MPa. As shown in FIG. 7, under uniaxial compression, the specimens of the unfired building material containing undisturbed shield muck exhibit integral splitting failure, and show high strength.

The strength of the unfired building material containing undisturbed shield muck prepared in Embodiments 2 and 3 is slightly higher than that of Embodiment 1, but Embodiment 1 provides a process of adding granulated blast-furnace slags, quicklime, sodium carbonate and sodium silicate powder at the same time, thus the process of Embodiment 1 is simpler and more convenient.

### Embodiment 4

The unfired building material containing undisturbed shield muck is prepared by the following method including:
taking 72.93 parts of the undisturbed shield muck, and directly crushing a few coarse particles through double rollers, so that the content of coarse particles with a particle size of 2 mm or more does not exceed 5%; adding 10.42 parts of water to the 72.93 parts of the undisturbed shield muck and stirring for 5 minutes to obtain a first slurry; at the same time, mixing and stirring 11.75 parts of granulated blast-furnace slags, 1.63 parts of quicklime and 1.63 parts of sodium carbonate evenly, and then adding a resulting mixture to the undisturbed shield muck and continuing stirring for 5 minutes; finally adding 1.63 parts of liquid sodium silicate and stirring for 5 minutes again to obtain a second slurry; pouring the second slurry into a mould with a height of 100 mm and a diameter of 50 mm, demoulding after naturally curing with film covering for 1 day, and then continuing natural curing with film covering until the 28th day to obtain the final unfired building material.

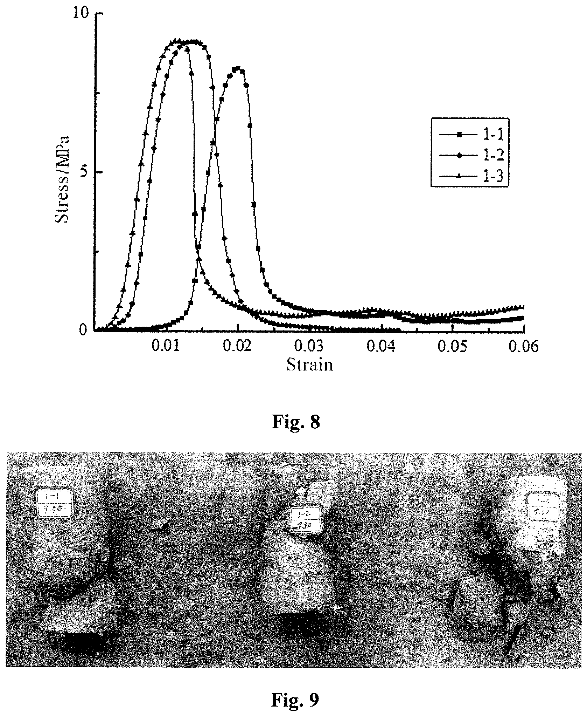

Three specimens made by this method, as shown in FIG. 8, have an average strength of 8.83 MPa. As shown in FIG. 9, under uniaxial compression, the specimens of the unfired building material containing undisturbed shield muck exhibit integral splitting failure, and show high strength.

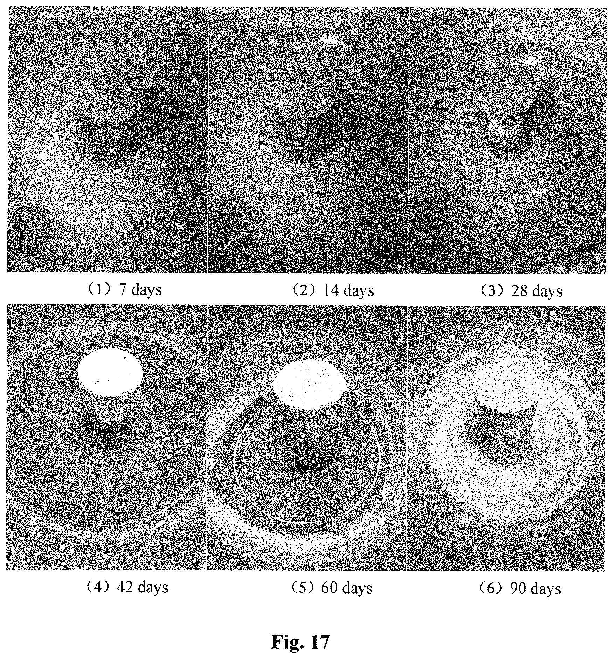

After being naturally cured with film covering for 28 days, a cylindrical specimen of the same batch was soaked in water with the top surface of the specimen being submersed by the water surface, and was stood in a room temperature environment at an ambient temperature of 25°C until the water is completely air-dried. The deposits on the surface and surrounding of the specimen were regularly observed through visual inspection to determine the efflorescence of the specimen qualitatively. With reference to FIG. 17, it can be seen that there is no efflorescence on the surface of the specimen after being soaked in water for 90 days, and there are a few white deposits around the specimen, which is mainly caused by excessive sodium carbonate dissolved in the water and left after air drying. Liquid sodium silicate is used in Embodiment 4, while solid sodium silicate is used in Embodiment 5 with better effects since there is neither efflorescence nor white deposits around the specimen.

Further, the mechanical properties, durability and economy of the unfired building material containing undisturbed shield muck prepared in the present application will be described in detail.

### Embodiment 5

The unfired building material containing undisturbed shield muck prepared in this embodiment is an unfired brick, which is made by the following method including:
taking 64.88 parts of the undisturbed shield muck, and directly crushing a few coarse particles through double rollers, so that the content of coarse particles with a particle size of 2 mm or more does not exceed 5%; adding 10.49 parts of water to the 64.88 parts of the undisturbed shield muck and stirring for 5 minutes to obtain a first slurry; at the same time, mixing and stirring 20.91 parts of granulated blast-furnace slags, 1.45 parts of quicklime, 1.45 parts of sodium carbonate and 0.82 parts of sodium silicate powder evenly, and then adding a resulting mixture to the undisturbed shield muck and continuing stirring for 10 minutes to obtain a second slurry; pouring the second slurry into a mould with a height of 100 mm and a diameter of 50 mm, demoulding after naturally curing with film covering for 1 day, and then continuing natural curing with film covering until the 28th day to obtain the final unfired building material.

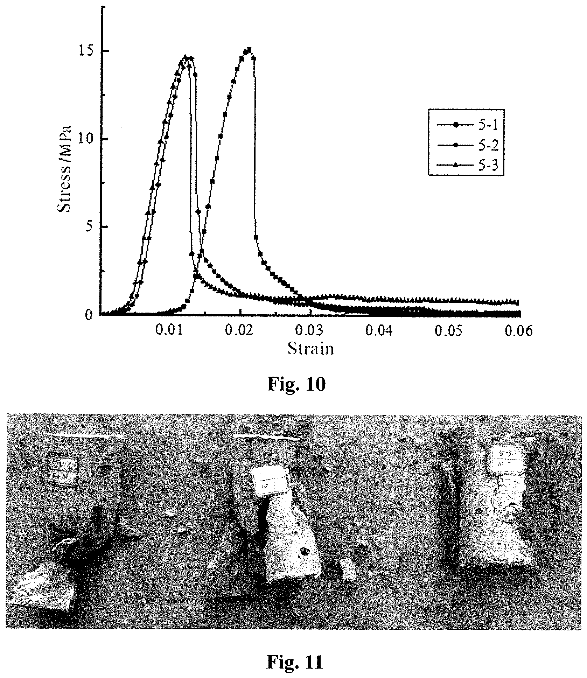

Three specimens made by this method, as shown in FIG. 10, have an average strength of 14.80 MPa. As shown in FIG. 11, under uniaxial compression, the specimens of the unfired building material containing undisturbed shield muck exhibit integral splitting failure, and show high strength and toughness.

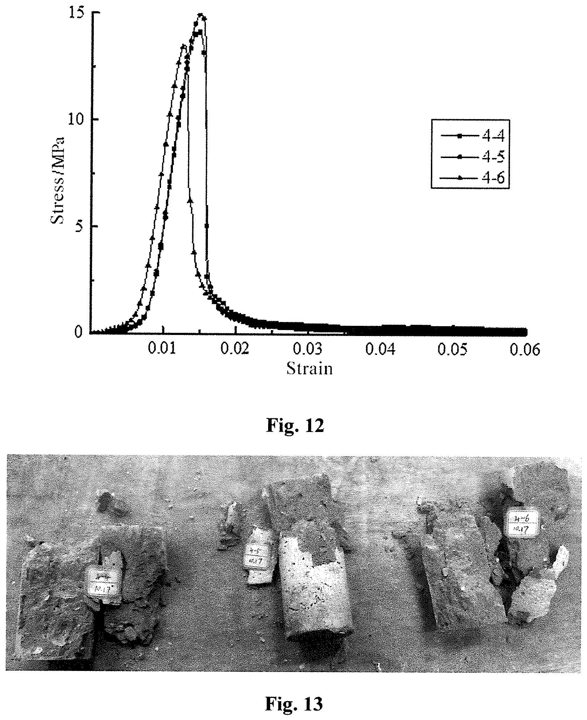

Three specimens of the same batch were dried and their dry masses were measured, and then soaked in water at 20°C; the water surface is 20 mm higher than the specimens. These specimens were taken out after being soaked for 4 days and placed on a wire mesh rack to drip water for 1 min, then the water on the surface of the specimens was wiped off with a wrung out damp cloth, and the masses of the specimens were respectively weighed. It is measured that the specimens have an average water absorption rate of 0.71% after being soaked in water for 4 days, and as shown in FIG. 12, the average strength is 14.22 MPa and the softening coefficient is 0.96. As shown in FIG. 13, under uniaxial compression, the specimens of the unfired building material containing undisturbed shield muck exhibit integral splitting failure, and show high strength.

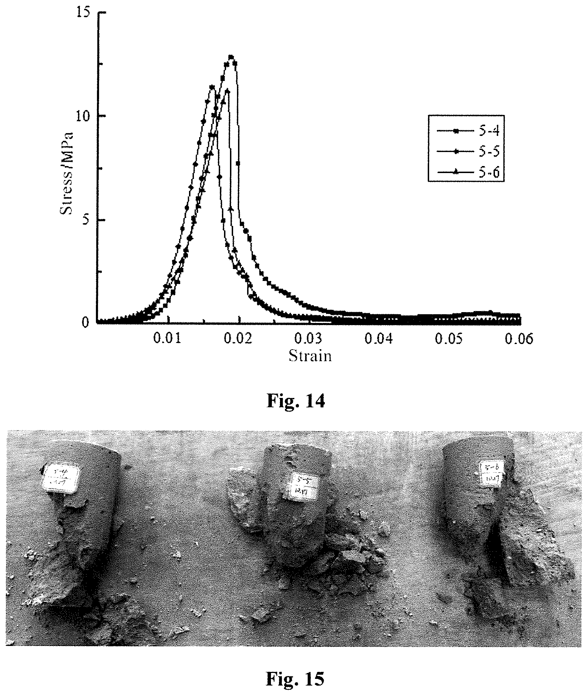

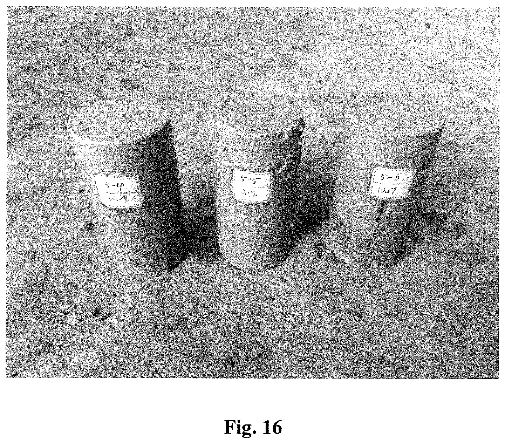

Three specimens of the same batch were soaked in water at 20°C and taken out after 24 hours. The water on the surface was wiped off with a damp cloth. These specimens were placed in a freeze-thaw box to be frozen at -20°C for 4 hours, and then thawed in water at 20°C for 4 hours, which is referred as to a freeze-thaw cycle. After 15 freeze-thaw cycles, the average mass loss is measured to be 1.7%, and as shown in FIG. 16, the specimens have a complete morphology. As shown in FIG. 14, the specimens have strengths of 12.94 MPa, 11.50 MPa, and 11.25 MPa respectively, that is, the average compressive strength after 15 freeze-thaw cycles is 11.90 MPa, and the strength loss is 19.6%. As shown in FIG. 15, under uniaxial compression, the specimens of the unfired building material containing undisturbed shield muck exhibit integral shear failure, and show high strength. According to the ratio in this embodiment, the cost of 20.91 parts of granulated blast-furnace slags, 1.45 parts of quicklime, 1.45 parts of sodium carbonate and 0.82 parts of sodium silicate powder is calculated, which is converted into the cost of standard brick of no more than 0.5 CNY.

Three specimens with a size of 40^{∗}40^{∗}160 mm in the same batch were prepared, cured for 28 days, the drying shrinkage values were measured until the difference between two adjacent length measurement readings is within 0.01 mm, and the average of the last two measurements is taken as the reading after drying. The measured drying shrinkage value of the specimens is 0.41 mm/m.

At the same time, a standard brick with length, width and height of 240 mm, 115 mm and 53 mm respectively in the same batch was prepared, cured for 28 days, knocked into two halves, one half (while leaving a micro crack in the middle) was soaked in water, with the top surface of the specimen being submersed by the water surface, and stood in a room temperature environment with an ambient temperature of 25□ until the water is completely air-dried. The deposits on the surface and surrounding of the specimen were regularly observed through visual inspection to determine the efflorescence of the specimen qualitatively, and meanwhile, compared with that of Comparative Example 1.

### Comparative Example 1

Taking 64.88 parts of the undisturbed shield muck, and directly crushing a few coarse particles through double rollers, so that the content of coarse particles with a particle size of 2 mm or more does not exceed 5%; adding 10.49 parts of water to the 64.88 parts of the undisturbed shield muck and stirring for 5 minutes to obtain a first slurry; at the same time, mixing and stirring 20.91 parts of granulated blast-furnace slags and 0.82 parts of sodium silicate powder evenly, and then adding a resulting mixture to the undisturbed shield muck and stirring for 5 minutes; finally adding 2.90 parts of flake sodium hydroxide to the mixed material and stirring for 5 minutes again to obtain a second slurry; pouring the second slurry into a standard brick mould with length, width and height of 240 mm, 115 mm, and 53 mm respectively, demoulding after naturally curing with film covering for 1 day, and then continuing natural curing with film covering until the 28th day to obtain the final unfired brick.

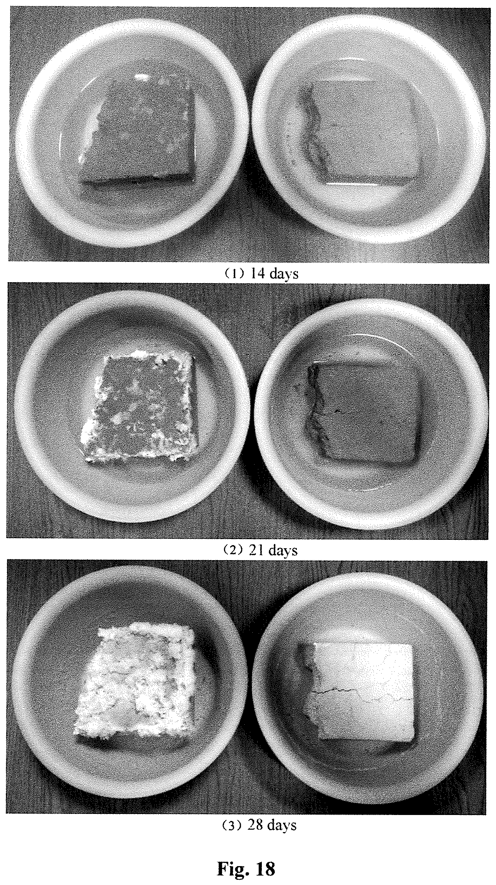

The unfired brick after being cured for 28 days was knocked into two halves, one half was soaked in water, with the top surface of the specimen being submersed by the water surface, and stood in a room temperature environment with an ambient temperature of 25□ until the water is completely air-dried. The deposits on the surface and surrounding of the specimen were regularly observed through visual inspection to determine the efflorescence of the specimen qualitatively, and meanwhile, compared with that of Embodiment 5. It can be seen from FIG. 18 that the unfired brick prepared in Embodiment 5 has almost no efflorescence, while the unfired brick in this comparative example has obvious efflorescence.

From the description of Embodiment 5, Embodiment 4 and Comparative Example 1, as well as FIG. 17 and FIG. 18, it can be seen that there is basically no precipitation of soluble salts on the surface of the unfired building materials provided in the present application, which effectively inhibits efflorescence.

Other beneficial effects are as follows.
1) The unfired building material has good mechanical properties and durability. Generally, curing agents are used to cure soft soils such as general peat, silt, silty soil, peaty soil, etc., or municipal sludge, waste mud, construction residue, tailings and the like. After being cured, they have the highest strength of only a few MPa, and poor durability, which are far from the basic requirements of building materials. In the present application, the undisturbed shield muck has an average strength up to 14.80 MPa or above after being naturally cured for 28 days, which meets the basic strength requirements of building materials. The drying shrinkage value is 0.41 mm/m. The average strength after being soaked in water for 4 days is 14.22 MPa, that is, the softening coefficient is 0.96, and the average water absorption rate after being soaked in water for 4 days is 0.71%, thus the undisturbed shield muck is water-resistant material. After 15 freeze-thaw cycles, the average compressive strength is 11.90 MPa, the average mass loss is 1.7%, and the strength loss is 19.6%, thus the undisturbed shield muck meets the requirements of frost resistance in cold areas and are good unfired building materials.
2) Quicklime, sodium carbonate and sodium silicate can not only independently stimulate the activity of blast-furnace slags, but also do it in a synergistic manner. The calcium hydroxide produced by the hydration of quicklime reacts with the incorporated sodium carbonate to produce calcium carbonate, which enhances the early strength of the material. The produced sodium hydroxide and calcium hydroxide (OH⁻) provide a strong alkaline environment for sodium silicate to stimulate the slags, thereby forming a calcium silicate hydrate (C-S-H) gel, and ensuring the main strength of the material. Calcium hydroxide replenishes calcium ions for the sodium carbonate to stimulate the slags, thereby forming calcium aluminosilicate hydrate (C-A-S-H) and other gels, and maintaining the later strength of the material. Meanwhile, due to the high content of clay particles in the muck, most of the water is bound water, and part of the free water is consumed by quicklime and blast-furnace slags, resulting in less free water in the capillary channels of the material; moreover, the permeability coefficient is small due to the large number of clay particles, resulting in the reduction of macropores in the material, that is, the amount of existing water is also reduced. Finally, the resulting gel substance further fills the pores inside the material and prevents water migration. Therefore, the material is extremely resistant to water, and at the same time, when the material is subjected to freeze-thaw cycles, the impact of the volume expansion caused by the water freezing is relatively small, thereby reducing the damage to the material and greatly improving the frost resistance.
3) The unfired building material is economical and environmentally friendly. The unfired building material prepared in the present application is economical in addition to ensuring basic compressive strength, water resistance, frost resistance and inhibition of efflorescence. According to the actual ratio, the cost of granulated blast-furnace slags, quicklime, sodium carbonate and sodium silicate powder is calculated, which is converted into the cost of standard bricks of no more than 0.5 CNY. Unfired building materials are prepared on-site from the undisturbed shield muck with high mud-containing rate and high water content, which can be used as resources to produce unfired bricks, building blocks, slope protection bricks, curb stones, etc., thus the material has a wide range of applications. In addition, the treatment process is simple and pollution-free, and the most difficult-to-treat undisturbed muck with high mud-containing rate and high water content is recycled into resources, saving a huge amount of muck disposal fees. It is economical and environmentally friendly, and can bring huge social, environmental and economic benefits.

Unless otherwise defined, all technical and scientific terms used herein have the same meaning as commonly understood by those skilled in the art to which the present application belongs. The terminology used in the specification of the present application is only for the purpose of describing specific embodiments, and is not intended to limit the present application. The various technical features of the above-mentioned embodiments can be combined arbitrarily, but in order to make the description concise, not all possible combinations of the individual technical features in the above embodiments have been described. However, as long as there is no contradiction in the combination of these technical features, it should be considered within the scope of this specification.

## Claims

1. An unfired building material containing undisturbed shield muck, comprising the following raw materials in parts by weight: 1 to 100 parts of undisturbed shield muck, 1 to 60 parts of granulated blast-furnace slags, 1 to 10 parts of quicklime, 1 to 10 parts of sodium carbonate, 1 to 5 parts of sodium silicate, and 1 to 20 parts of water.

2. The unfired building material containing undisturbed shield muck of claim 1, **characterized in that** the undisturbed shield muck has a mud-containing rate of more than 70%.

3. The unfired building material containing undisturbed shield muck of claim 1, **characterized in that** the granulated blast-furnace slag has a mesh size of 200 to 400.

4. The unfired building material containing undisturbed shield muck of claim 1, **characterized in that** the quicklime has a calcium content of 91% to 95%, and a fineness of 200 mesh with a passing rate of 70% and more.

5. The unfired building material containing undisturbed shield muck of claim 1, **characterized in that** the sodium carbonate has a mesh size of 150 to 200 mesh; and/or, the sodium silicate is sodium silicate powder or liquid sodium silicate, wherein the sodium silicate powder has a modulus of 2.3 to 3.0, and the liquid sodium silicate has a modulus of 3.1 to 3.4.

6. A preparation method of the unfired building material containing undisturbed shield muck of any one of claims 1 to 5, comprising the following steps:
1) adding water to undisturbed shield muck in proportion and stirring to obtain a first slurry;
2) adding granulated blast-furnace slags, quicklime, sodium carbonate and sodium silicate to the first slurry obtained in step 1) in proportion, and continuing stirring to obtain a second slurry; and
3) pouring the second slurry obtained in step 2) into a mould, curing and demoulding to obtain the unfired building material containing undisturbed shield muck.

7. The preparation method of claim 6, **characterized in that** in step 1), the water is added to the undisturbed shield muck in proportion and is stirred for 5 to 10 minutes to obtain the first slurry.

8. The preparation method of claim 6, **characterized in that** in step 2), the granulated blast-furnace slags, the quicklime, the sodium carbonate and the sodium silicate are added to the first slurry obtained in step 1) in proportion, and the stirring is continued for 5 to 10 minutes to obtain the second slurry.

9. The preparation method of claim 6, **characterized in that** in step 2), the granulated blast-furnace slags, the quicklime, the sodium carbonate and the sodium silicate are mixed evenly in proportion, and a resulting mixture is added to the first slurry obtained in step 1).

10. The preparation method of claim 6, **characterized in that** in step 2), the sodium silicate is liquid sodium silicate; the granulated blast-furnace slags, the quicklime and the sodium carbonate are mixed and stirred evenly in proportion, a resulting mixture is added to the first slurry for stirring for 5 to 10 minutes, and then the liquid sodium silicate is added to continue stirring to obtain the second slurry.
